Europäisches Patentamt

European Patent Office

Office européen des brevets

(19)

(11) Veröffentlichungsnummer: **0 134 298**
**A1**

(12) # EUROPÄISCHE PATENTANMELDUNG

(21) Anmeldenummer: 83109064.2

(22) Anmeldetag: 14.09.83

(51) Int. Cl.⁴: **C 08 K 5/34**
**C 08 K 3/38, C 08 L 61/20**
**C 08 J 5/24**

(43) Veröffentlichungstag der Anmeldung:
20.03.85 Patentblatt 85/12

(84) Benannte Vertragsstaaten:
AT BE CH DE FR GB IT LI LU NL SE

(71) Anmelder: August Krempel Söhne GmbH & Co.
Hohenzollernstrasse 10
D-7000 Stuttgart 1(DE)

(72) Erfinder: Kümmel, Robert
Goethestrasse 12
D-7143 Vaihingen/Enz 1(DE)

(74) Vertreter: Bunke, Holger, Dr.rer.nat. Dipl.-Chem. et al,
Patentanwälte Prinz, Leiser, Bunke & Partner
Ernsbergerstrasse 19
D-8000 München 60(DE)

(54) **Duroplastische Harzmasse und ihre Verwendung.**

(57) Die Erfindung betrifft eine duroplastiche, härtbare, flammhemmend und selbstverlöschend ausgerüstete Harzmasse auf Basis eines üblichen Aminoplasts oder Reaktionsharzes, das gegebenenfalls ein übliches Kalt- oder Warmhärtersystem enthält und durch einen Gehalt an Melaminborat gekennzeichnet ist, sowie die Verwendung dieser Harzmasse zur Herstellung lagerfähiger Prepregs, zur Imprägnierung und Beschichtung von Filamentgeweben, insbesondere aus Glas-, Kohlenstoff- und Poly-p-phenylenterephthalamid-Fasern, sowie zur Herstellung schwerentflammbarer Laminate und Formkörper, insbesondere für die Luft- und Raumfahrtindustrie.

EP 0 134 298 A1

August Krempel Soehne GmbH & Co.
Hohenzollernstraße 10
7000 Stuttgart 1

---

Duroplastische Harzmasse und ihre Verwendung

---

Die Erfindung betrifft eine duroplastische, härtbare, flammhemmend und selbstverlöschend ausgerüstete Harzmasse auf
Basis eines üblichen Aminoplasts oder Reaktionsharzes, das
gegebenenfalls ein übliches Kalt- oder Warmhärtersystem
enthält.

Duroplastische, härtbare Harzmassen sind bekannt und werden
für die vielfältigsten Zwecke verwendet. Sie sind meist auf
Basis von Aminoplasten, also Harnstoff-, Melamin-, Urethan-,
Cyanamid-, Dicyandiamid-, Sulfonamid- oder Anilinharzen
oder dergleichen einerseits und Formaldehyd oder einer
anderen Carbonylkomponente andererseits aufgebaut. Oder sie
bestehen im wesentlichen aus einem Reaktionsharz, worunter
fließfähige, flüssige oder verflüssigbare Harze zu verstehen sind, die entweder für sich allein oder aber mit
Reaktionsmitteln (Härtern, Beschleunigern und dergleichen)
durch Polyaddition, Polykondensation oder eine andere Polymerisationsreaktion aushärten. Die bekanntesten Reaktionsharze sind beispielsweise Epoxidharze, Phenolformaldehydharze, ungesättigte Polyesterharze, Acrylharze, Polyesterimidharze usw. Für die Vernetzung (Härtung) dieser Harze sind sowohl Kalthärtersysteme als auch Warmhärtersysteme bekannt. Melamin und seine Derivate, darunter Melam, Melem und Melon, gehören aufgrund ihrer Reaktivität, ihrer Polyfunktionalität und ihrer relativen thermischen Stabilität zu den bevorzugten Härtersystemen für Aminoplaste und Reaktionsharze.

Da es sich bei allen diesen Harzen um duroplastische Harze handelt, die nach ihrer Härtung nicht mehr verformbar sind, hängen die Lagerfähigkeit und die Dauer der Verarbeitbarkeit, in bestimmten Fällen "Topfzeit" genannt, ganz entscheidend von Art und Menge der reaktiven Harzbestandteile und der Abstimmung der Härtersysteme auf die jeweils verwendeten, speziellen Harztypen ab.

Duroplastische Harzmassen, die zum Imprägnieren von Trägerbahnen, beispielsweise aus Glas-, Kohlenstoff- oder Poly-p-phenylenterephthalamid-Fasern bzw. Kombinationen solcher Fasern, und zur Herstellung von mehrschichtigen Laminaten aus solchen imprägnierten Trägerbahnen und insbesondere zur Herstellung sogenannter Prepregs oder zur Herstellung von geformten Bauteilen verwendet werden, müssen schwer entflammbar, flammhemmend und selbstverlöschend sein, wenn sie in der Luft- und Raumfahrtindustrie, insbesondere für die Innenausstattung von Flugzeugen, Verwendung finden sollen.

Die von den nationalen und internationalen Luftfahrtbehörden geforderten Normen, denen die Werkstoffe für die Innenausstattung von zivilen Verkehrsflugzeugen entsprechen müssen, beispielsweise die FAR 25.853, verlangen, daß die duroplastischen Harzmassen auch im Brandfalle selbst nicht brennen und bei der thermischen Beanspruchung keine sichtbehindernden oder toxischen Bestandteile freisetzen, daß sie eine gewiße Hitzeschildwirkung entfalten, dabei aber ein möglichst geringes Gewicht und ein Höchstmaß an Festigkeit besitzen. Diese Anforderungen entspringen der Erkenntnis, daß insbesondere bei Brandkatastrophen am Boden ein Großteil der Passagiere und der Besatzung moderner Großraumflugzeuge gerettet werden könnte, wenn die Innenausstattung auch nur wenige Minuten einem Brand standhielte.

Die bekannten duroplastischen Harzmassen, die für Luft- und Raumfahrtzwecke eingesetzt werden, enthalten meist mehr oder weniger giftige anorganische Verbindungen wie Antimontrioxid oder halogenierte organische Verbindungen wie beispielsweise polybromierte Diphenyle und daraus hergestellte Diglycidäther als Flammschutzmittel. Dabei muß jedoch berücksichtigt werden, daß von der Unzahl bekannter Flammschutzmittel nur solche Verbindungen für duroplastische Harzmassen geeignet sind, die mit den reaktionsfähigen Bestandteilen der Harze nicht unter Vernetzung reagieren, die also die Härtung der duroplastischen Harze weder beschleunigen noch hemmen.

Nun ist es auch bereits bekannt, Melamin und dessen Derivate als Flammschutzmittel bei Trockenlöschgeräten zu verwenden, aber auch zur flammfesten Ausrüstung von Papieren und thermoplastischen Textilfasern, insbesondere von Polyamidfasern und Polyamidmassen. Da Melamin, wie bereits erwähnt, aber gleichzeitig ein bekanntes Härtersystem für duroplastische Harze darstellt, wurde seine Verwendung als Flammschutzmittel für eben jene duroplastischen, härtbaren Harzmassen von der Fachwelt ebenso ausgeschlossen, wie eine Verwendung der an sich ebenfalls als Flammschutzmittel für Thermoplaste bekannten Melaminsalze.

Der Erfindung liegt die Aufgabe zugrunde, eine duroplastische, härtbare, flammhemmend und selbstverlöschend ausgerüstete Harzmasse der eingangs genannten Gattung zu schaffen, die ein Flammschutzmittel enthält, welches unter Brandbedingungen keine toxischen Gase freisetzt, aber vor allem die Vernetzung des duroplastischen Harzes nicht beschleunigt, eine Harzmasse also, die besonders lagerbeständig und daher zur Herstellung von Prepregs und Premixes, insbesondere für die Luft- und Raumfahrtindustrie, geeignet ist.

Diese Aufgabe wird erfindungsgemäß bei einer Harzmasse der eingangs genannten Gattung dadurch gelöst, daß die Harzmasse einen Gehalt an Melaminborat aufweist.

Es hat sich nämlich überraschenderweise gezeigt, daß Melaminborat, das 1:1-Säureadditionssalz von Melamin und Borsäure, entgegen dem in der Fachwelt verbreiteten Vorurteil ein geradezu ideales Flammschutzmittel für duroplastische, härtbare Harzmassen auf Basis von Aminoplasten oder Reaktionsharzen ist, weil es offenbar gerade in diesen Mischungen, sogar bis zu Temperaturen von mehr als 120°C, vollkommen undissoziiert bleibt und dadurch keine Kondensations- oder Vernetzungsreaktionen mit den reaktiven Bestandteilen der duroplastischen Harzmassen eingeht, obwohl andere Melaminderivate ausgesprochene Härter für duroplastische Harzmassen darstellen.

Auch ein an sich zu erwartender katalytischer Härtungseffekt, wie er bei dem Vorprodukt Dicyandiamid auftritt, wurde überraschenderweise nicht gefunden. Fertige Harz / Härter / Melaminboratmischungen bleiben, wie die entsprechenden Alterungsuntersuchungen ergaben, über mehrere Monate auch bei Raumtemperatur völlig unverändert. Bei entsprechender Energiezufuhr erfolgt die Aushärtung jedoch in der gleichen Weise wie bei nicht mit Melaminborat versetzten Harz / Härtermischungen Da das erfindungsgemäß verwendete Melaminborat die Härtung der duroplastischen Harzmassen nicht beeinträchtigt, vor allem nicht beschleunigt, sind die erfindungsgemäßen Harzmassen besonders zur Herstellung lagerfähiger Prepregs und Premixes zur Imprägnierung und Beschichtung von bahnförmigen Trägern aller Art, aber auch zur Herstellung von Formkörpern und Laminaten geeignet.

Prepregs sind nach der Definition der DIN 65 146, Teil 2, "Filamentgewebe aus Kohlenstoffasern, die im Anlieferungszustand einen bestimmten Anteil Harzmasse enthalten und ohne weitere Zusätze durch Wärme mit oder ohne Druck härtbar sind". Ganz allgemein werden unter Prepregs aber auch alle anderen vorimprägnierten Flächengebilde verstanden, bei denen die duroplastische Harzmasse nur in geringem Maße vernetzt, aber nicht vollständig ausgehärtet ist, so daß die vorimprägnierten Flächengebilde lagerfähig sind und bis zur Weiterverarbeitung zu Laminaten, Formkörpern, faserverstärkten Bauteilen oder Halbzeugen verformbar bleiben.

Aus den Prepregs bzw. härtbaren Preßmassen (Premixes) können, speziell für die Innenausstattung von Flugzeugen, Decken- und Wandverkleidungen hergestellt werden, Trenn- und Zwischenwände, Bordkücheneinrichtungen, Abteilwände, Fußbodenplatten, Gepäckablagefächer, Fußbodenbeläge, Polstermaterialien, dekorative Schichtstoffe, Kunstleder, Fugen- und Kantenverkleidungen, Isoliermatten, Luftkanäle, Leisten, Bänder, Schilder, Gehäuse und Behälter aller Art. Diese Bauteile können nach beliebigen, bekannten Verfahren aus den erfindungsgemäßen Harzmassen hergestellt werden, beispielsweise durch Kaltpressen, Warmpressen, Spritzpressen, Strangziehen, durch Faserwickelverfahren und dergleichen.

Es hat sich überraschenderweise gezeigt, daß bei Verwendung von Melaminborat als Flammschutzmittel weder die mechanischen, noch die thermischen, noch die elektrischen Eigenschaften der aus den erfindungsgemäßen Harzmassen hergestellten Bauteile in irgendeiner Weise beeinträchtigt werden.

Die aus den erfindungsgemäßen Harzmassen hergestellten Formkörper und Bauteile sind schwer entflammbar und selbstverlöschend, sie entwickeln bei Beflammung keinen Rauch, keine Blausäure, kein Kohlenmonoxid, keine nitrosen Gase, kein Schwefeldioxid, keinen Halogenwasserstoff und keine sonstigen toxischen Gase. Unter starker Hitzeeinwirkung entstehen als Zerfallsprodukte ausschließlich Wasserdampf, Ammoniak, Kohlendioxid und Borsäure (als Feststoff). Alle diese Zerfallsprodukte sind unbrennbare Flammhemmer. Auch Borsäure ist unbrennbar und nicht flüchtig; sie verhindert darüber hinaus die Qualmentwicklung und wirkt als Hitzeschild. Der Zerfall von Melaminborat ist so stark endotherm, daß die thermische Zersetzung eines aus den erfindungsgemäßen Harzmassen hergestellten Prüfkörpers sofort nach der Entfernung der Hitzequelle aufhört.

Vorteilhafte Ausführungsformen der erfindungsgemäßen Harzmasse bestehen darin, daß der Melaminboratgehalt mindestens 5 Vol.-%, bezogen auf das Gesamtvolumen der Masse, und vorzugsweise 15 bis 25 Vol.-%, bezogen auf das Gesamtvolumen der Masse, beträgt, sowie darin, daß das Melaminborat in fein und gleichmäßig verteilter Form in dem Harz enthalten ist, wodurch die Lagerbeständigkeit von Prepregs und Premixes noch erhöht wird, und schließlich darin, daß das Melaminborat eine mittlere Teilchengröße von $< 0,1$ mm aufweist.

Die vorstehend beschriebene Harzmasse wird erfindungsgemäß verwendet zur Herstellung lagerfähiger Prepregs nach DIN 65 146, Teil 2, und CFK-Prepregs nach der Luftfahrtnorm LN 29971, zur Imprägnierung und Beschichtung von Filamentgeweben, insbesondere aus Glas, Kohlenstoff- und Poly-p-phenylenterephthalamid-Fasern, sowie zur Herstellung schwer entflammbarer Laminate und Formkörper, insbesondere für die Luft- und Raumfahrtindustrie.

Die Erfindung wird anhand der folgenden Beispiele weiter erläutert:

Beispiel 1

In einer Kugelmühle werden 100 g mittelviskoses, handelsübliches Epoxidharz mit 30 g Melaminborat naß vermahlen, bis eine durchschnittliche Korngröße von 0,025 mm erreicht ist. Dieses Gemisch wird mit 5 g feingefälltem Dicyandiamid und 0,5 g Benzyldimethylanilin (Härtersystem) versetzt.

Mit der so erhaltenen Harzmasse wird ein Glasgewebe in Atlasbindung mit einem Flächengewicht von 295 g/m$^2$ so getränkt, daß ein Harzgehalt von 50 Gew.-% erhalten wird. In einem Labortrockenschrank mit Zwangsluftumwälzung wird das so imprägnierte Gewebe bei einer Temperatur von 120$^o$C bis zur Erreichung des B-Zustandes teilweise gehärtet. Danach werden 8 Lagen des so erhaltenen Prepregs in üblicher Weise in einer Laborpresse bei 120$^o$C miteinander warmverpreßt und ausgehärtet, so daß ein Prüflaminat mit einem Harzgehalt von ca. 40 Gew.-% erhalten wird. Das Prüflaminat wird beflammt, wobei die beflammte Probe ca. 3 Sekunden nach Entfernung der Zündquelle erlischt. Toxische Gase im Sinne der FAR 25.835 sind nicht nachweisbar.

Beispiel 2

Es wird eine mittelviskose Epoxidharzmasse, wie in Beispiel 1 beschrieben, hergestellt und in die Tränkwanne einer herkömmlichen Strangziehmaschine eingefüllt. Durch die Tränkwanne werden kontinuierlich Glasrovings geführt und dadurch imprägniert. Aus den getränkten Glasrovings wird ein Normprüfstab gezogen und, wie in Beispiel 1 beschrieben, ausgehärtet und beflammt. Das Ergebnis des Brandversuchs entspricht vollständig demjenigen des Beispiels 1.

Beispiel 3

Entsprechend dem in Beispiel 1 beschriebenen Verfahren, wird eine niederviskose Epoxidharzmasse unter Zusatz von 95 g Methylnadicsäureanhydrid und 0,5 g Benzyldimethylanilin hergestellt. Diese Masse wird in die Tränkeinheit einer üblichen Faserwickelmaschine eingefüllt, durch welche Glasfäden kontinuierlich hindurchgeführt werden. Ein unter Verwendung der mit der Harzmasse getränkten Glasfäden gewickelter und gehärteter Prüfkörper zeigt ein vollkommen gleiches Brandverhalten wie die gemäß den Beispielen 1 und 2 hergestellten Prüfkörper.

### Beispiel 4

100 g handelsübliches unmodifiziertes Polyesterharz werden mit 25 g Melaminborat in einer Perl- oder Kugelmühle verrieben, bis das Melaminborat eine mittlere Teilchengröße von weniger als 0,05 mm aufweist. Das Gemisch wird mit 2 g Benzoylperoxid und 0,2 g Kobaltoktoatlösung sowie 100 g Dolomitpulver, 100 g Glasfaserkurzschnitt und 2,5 g Magnesiumoxid versetzt. Die so erhaltene duroplastische, härtbare Harzmasse wird in einem Prüfwerkzeug bei einer Temperatur von 120$^O$C zu einem Normkörper verpreßt, welcher dann dem in Beispiel 1 beschriebenen Brandversuch unterworfen wird. Das Brandverhalten des Normkörpers entspricht vollständig demjenigen der Prüfkörper gemäß den Beispielen 1 bis 3.

### Beispiel 5

100 g eines handelsüblichen, flüssigen, mittelviskosen Phenol-Formaldehyd-Harzes werden in einer Naßmühle mit 18 g Melaminborat fein vermahlen. Ein damit getränktes Glasfasergewebe wird zu einem Prüflaminat bei einer Temperatur von 160$^O$C in üblicher Weise verpreßt. Auch das Brandverhalten dieses Prüflaminats entspricht vollständig demjenigen der Prüfkörper gemäß den Beispielen 1 bis 4.

### Beispiel 6

Mit dem gemäß Beispiel 1 hergestellten Epoxidharz werden ein Kohlenfasergewebe und ein Aramidfasergewebe imprägniert und, wie in Beispiel 1 beschrieben, weiter behandelt. Auch die daraus hergestellten Prüflaminate weisen das gleiche Brandverhalten auf wie die Prüfkörper gemäß Beispiel 1 bis 5.

Patentansprüche

1. Duroplastische, härtbare, flammhemmend und selbstverlöschend ausgerüstete Harzmasse auf Basis eines üblichen
Aminoplasts oder Reaktionsharzes, das gegebenenfalls
ein übliches Kalt- oder Warmhärtersystem enthält,
gekennzeichnet durch einen Gehalt an Melaminborat.

2. Harzmasse nach Anspruch 1, dadurch gekennzeichnet, daß
der Melaminboratgehalt mindestens 5 Vol.-% beträgt.

3. Harzmasse nach Anspruch 2, dadurch gekennzeichnet, daß
der Melaminboratgehalt 15 bis 25 Vol.-% beträgt.

4. Harzmasse nach einem der Ansprüche 1 bis 3, dadurch
gekennzeichnet, daß das Melaminborat in fein und
gleichmäßig verteilter Form in dem Harz enthalten ist.

5. Harzmasse nach Anspruch 4, dadurch gekennzeichnet, daß
das Melaminborat eine mittlere Teilchengröße von
$< 0,1$ mm aufweist.

6. Verwendung der Harzmasse gemäß einem der Ansprüche
1 bis 5 zur Herstellung lagerfähiger Prepregs nach
DIN 65 146, Teil 2, und CFK-Prepregs nach LN 29 971,
zur Imprägnierung und Beschichtung von Filamentgeweben,
insbesondere aus Glas-, Kohlenstoff- und Poly-p-
phenylenterephthalamid-Fasern, sowie zur Herstellung schwerentflammbarer Laminate und Formkörper, insbesondere für die Luft- und Raumfahrtindustrie.

Europäisches Patentamt

## EUROPÄISCHER RECHERCHENBERICHT

EP 83 10 9064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 704 275 (CALTOP SA) * Ansprüche 1, 4, 13; Seite 5, Zeile 15 - Seite 6, Zeile 9 * | 1-3,6 | C 08 K 5/34 C 08 K 3/38 C 08 L 61/20 C 08 J 5/24 |
| X | GB-A-1 373 908 (NATIONAL RESEARCH DEVELOPMENT CORP.) * Seite 1, Zeilen 10-41; Seite 3, Zeile 17 - Seite 5, Zeile 19; Ansprüche 1, 19 * | 1-6 | |
| A | Patent Abstracts of Japan Band 1, Nr. 48, 11. Mai 1977 Seite 78C77 & JP-A-52-5854 | 1 | |
| A | DD-A- 202 173 (H. SCHMITTMANN et al.) * Ansprüche 1, 9 * | 1 | |

RECHERCHIERTE SACHGEBIETE (Int. Cl. ³)

C 08 J 5/24
C 08 K 3/38
C 08 K 5/00
C 08 L 61/00
C 08 L 63/00

Der vorliegende Recherchenbericht wurde für alle Patentansprüche erstellt.

| Recherchenort | Abschlußdatum der Recherche | Prüfer |
|---|---|---|
| BERLIN | 27-04-1984 | IDEZ C.G. |